# EUROPEAN PATENT APPLICATION

(11) **EP 2 941 008 A1**
(43) Date of publication of application: **04.11.2015**
(21) Application number: 13867920.4
(22) Date of filing: 10.12.2013
(51) Int. Cl.: H04Q 9/00

(54) **CONTROL SYSTEM, CONTROL METHOD AND PROGRAM**

(30) Priority: 25.12.2012 JP 2012281287
(71) Applicant: Mitsubishi Electric Corporation, Tokyo 100-8310 (JP)
(72) Inventor: KOTAKE Hiroaki, Tokyo 100-8310 (JP); KOIZUMI Yoshiaki, Tokyo 100-8310 (JP); MUKAI Takuya, Tokyo 100-8310 (JP)
(74) Representative: Pfenning, Meinig & Partner GbR
(86) International application number: PCT/JP2013/083071
(87) International publication number: WO 2014/103700

(57) **Abstract**

A control system comprises: a sensor unit (20), a system controller (30), and a device (40) that generates heat and that is located in a room (13). The system controller (30) generates thermal images of the room (13) based on data that is transmitted from the sensor unit (20). The system controller (30) also detects that position of the device (40) and the position of a user (U1) that moves around the device (40) based on the generated thermal images. The system controller (30) then controls the device (40) based on the detected positions.

## Description

### Technical Field

The present disclosure relates to a control system, a control method and a program.

### Background Art

In recent years devices have been developed that operate according to the state of a user that was detected by an infrared sensor or the like. For example, air-conditioners that adjust the direction and amount of air blown according to the position of a user that was detected using such a sensor are being produced. Such devices, when compared with devices that do not comprise sensors, are able to improve the comfort of a user.

Moreover, systems have been proposed that control devices that do not comprise sensors by using results detected by a device that comprises a sensor (for example, refer to Patent Literature land Patent Literature 2).

The system disclosed in Patent Literature 1 comprises an air-conditioner that comprises a human-detecting sensor, and audio equipment and the like that is connected to the air-conditioner via a home network. This system identifies a room where a person is located from position information for a person that was detected by the human-detecting sensor, and causes the audio equipment and the like that is installed in that room to operate.

The system disclosed in Patent Literature 2 determines whether or not there is a person in each room using a human-detecting sensor. This system controls household electrical appliances such as lighting to correspond to an operating level that was preset according to whether or not there is a person.

### Citation List

### Patent Literature

[Patent Literature 1] Unexamined Japanese Patent Application Kokai Publication No. 2004-173185
[Patent Literature 2] Unexamined Japanese Patent Application Kokai Publication No. 2004-363661

### Summary of Invention

### Technical Problem

The systems disclosed in Patent Literature 1 and Patent Literature 2 control devices based on simply whether or not a person is in a room. Therefore, it is difficult for these systems to perform detail control of devices that do not comprise sensors. Consequently, when a device that generates heat is controlled for example, there is room for improving safety.

Taking into consideration the problems described above, the objective of the present disclosure is to safely control devices that generate heat.

### Solution to Problem

In order to accomplish the objective above, the control system of the present disclosure comprises: a heat-generating device to generate heat; thermal image generation means for generating thermal images of a space where the heat-generating device is located; position detection means for detecting the position of the heat-generating device and the position of a moving body that moves around the heat-generating device based on the thermal images; and control means for controlling the heat-generating device based on the position of the heat-generating device and the position of the moving body that were detected by the position detection means.

### Advantageous Effects of Invention

With the present disclosure, a heat-generating device is controlled based on the position of the heat-generating device and a moving body. As a result, it is possible to safely control a device that generates heat.

### Brief Description of Drawings

FIG. 1 is a block diagram illustrating the construction of a control system of a first embodiment;
FIG. 2 is a block diagram illustrating the configuration of a sensor unit, system controller and device of a first embodiment;
FIG. 3 is a flowchart illustrating a series of processes that is executed by the system controller;
FIG. 4 illustrates an example of a thermal image;
FIG. 5 is a flowchart of a device detection process;
FIG. 6 is a block diagram illustrating the configuration of a sensor unit, system controller, device and electric power measurement device of a second embodiment;
FIG. 7 is a flowchart of a device detection process; and

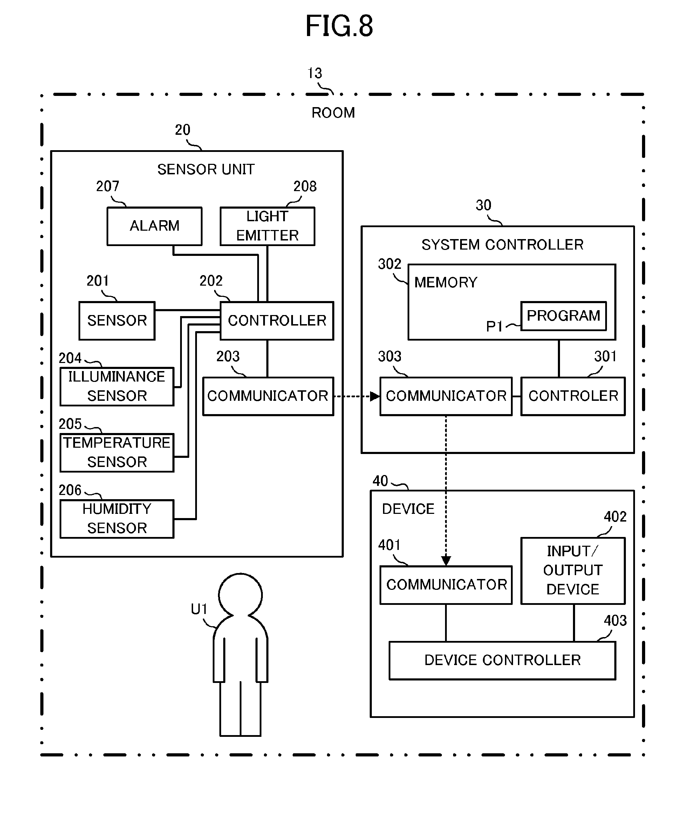

FIG. 8 is a block diagram illustrating construction of a variation of a sensor unit.

### Description of Embodiments

In the following, embodiments of the present disclosure will be explained in detail with reference to the drawings.

### First Embodiment

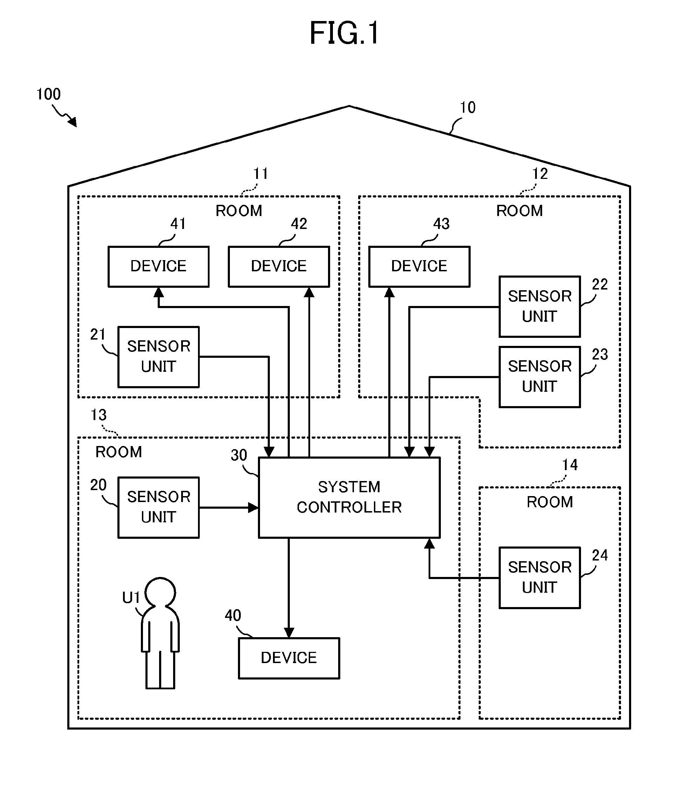

FIG. 1 illustrates a control system 100 of a first embodiment. The control system 100 is a system that controls devices 40, 41, 42 and 43 that are distributed and installed inside a building 10. The control system 100 comprises sensor units 20, 21, 22, 23 and 24, a system controller 30 and devices 40 to 43.

The sensor unit 20, system controller 30 and device 40 are installed in a room 13 inside the building 10. Moreover, the sensor unit 21 and devices 41 and 42 are installed in a room 11. The sensor units 22 and 23 and device 43 are installed in a room 12. The sensor unit 24 is installed in a room 14.

Each of the sensor units 20 to 24 measures the thermal distribution (temperature distribution) of the room where each of the sensor units 20 to 24 is installed, and notify the system controller 30 of the measurement results by wireless communication. The system controller 30 controls the devices 41 to 43 by wireless communication based on the measurement results from the sensor units 20 to 24.

The sensor units and devices installed in each of the rooms 11 to 14 form a subsystem together with the system controller 30. In the following, an example of the subsystem will be explained for the subsystem that comprises the sensor unit 20, system controller 30 and device 40 that are installed in the room 13.

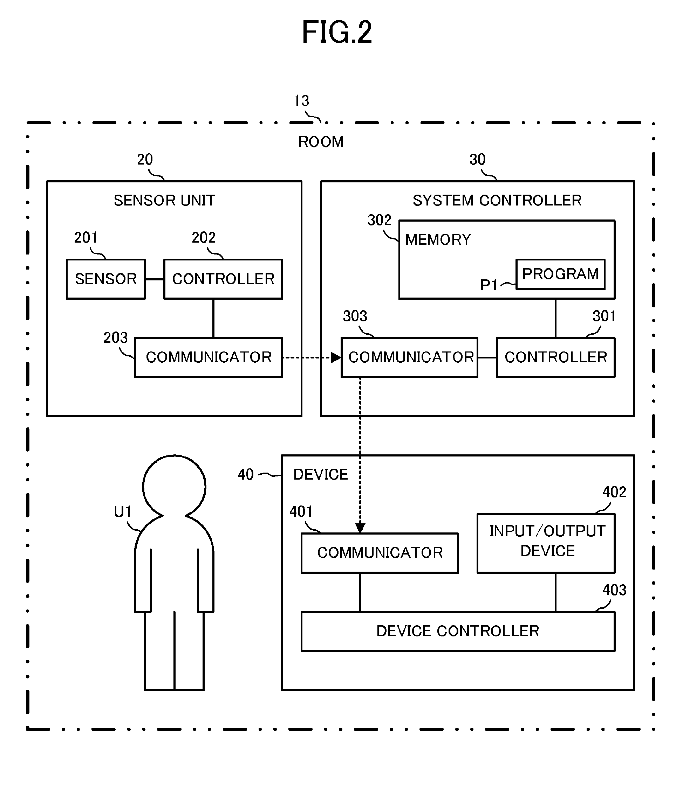

The sensor unit 20, as illustrated in FIG. 2, comprises a sensor 201, a controller 202 and a communicator 203.

The sensor 201, for example, comprises a thermopile array comprising a plurality of thermopile elements that is arranged in a matrix shape and a lens. The thermopile elements are sensor elements that detect infrared rays that are radiated from a heat source. The sensor 201 is installed on a wall or the ceiling or the like of the room 13. The angle of view and position of the sensor 201 is adjusted so that the sensor 201 is able to measure the thermal distribution of the room 13.

The controller 202 comprises a processing device such as a CPU (Central Processing Unit), RAM (Random Access Memory) that is used as a work area for the processing device, and a driver for driving the components of the sensor unit 20. The controller 202 executes processing (for example, A/D conversion) related to the thermal distribution data measured by the sensor 201. Moreover, the controller 202 periodically transmits thermal distribution data to the system controller 30 by controlling the communicator 203.

The communicator 203 is a communication interface for the sensor unit 20 to perform wireless communication with the system controller 30 according to standards such as wireless LAN (Local Area Network). The communicator 203 relays communication between the controller 202 and the system controller 30.

The sensor units 21 to 24 all have the same construction as sensor unit 20.

The system controller 30 comprises a controller 301, a memoiy 302 and a communicator 303.

The controller 301 comprises a processing device such as a CPU, RAM that is used as a work area for the processing device, and a driver for driving the components of the system controller 30. The controller 301 executes various processing by loading and executing a program P1 that is stored in the memory 302.

For example, the controller 301 generates a thermal image of the room 13 from the thermal distribution data that was transmitted from the sensor unit 20. The controller 301 detects the position of a user U1 and device 40 based on the thermal image. The user U1 is a user that uses the device 40 while moving around the device 40. The controller 301 controls the device 40 based on the detected position.

The memory 302 is constructed so as to include, for example, a non-volatile memory such as a flash memory. The memory 302, in addition to a program P1 that is executed by the controller 301, stores a log of thermal images that were generated by the controller 301, information related to the device 40 that is installed in the room 13, and various kinds of parameters.

The communicator 303 is a communication interface for the system controller 30 to perform wireless communication with the sensor unit 20 and device 40 according to a standard such as wireless LAN. The communicator 303 relays communication between the controller 301 and the sensor unit 20, and relays communication between the controller 301 and the device 40.

The device 40 is a device that generates heat such as an IH (Induction Heating) cooking device. The device 40 comprises a communicator 401, an input/output device 402 and a device controller 403.

The communicator 401 is a communication interface for the device 40 to perform wireless communication with the system controller 30. The communicator 401 relays communication between the system controller 30 and the device controller 403.

The input/output device 402 comprises an input device for the user U1 to input information to the device 40 and an output device for presenting information to the user U1. The input device, for example, is operating keys, a touch pad or the like. The output device, for example, is a liquid-crystal display or a speaker. The input/output device 402 notifies the device controller 403 of instructions inputted by the user U1.

The device controller 403, for example, comprises a CPU, RAM and a driver for driving the components of the device 40. The device controller 403 controls the components of the device 40 according to instructions from the system controller 30. Moreover, the device controller 403 controls the components of the device 40 according to instructions that are inputted by the user U1. For example, the device controller 403, by causing AC current to flow in a coil of the device 40, heats a vessel on top of a cooking stove.

Furthermore, the devices 41 to 43 are all devices that generate heat similar to device 40.

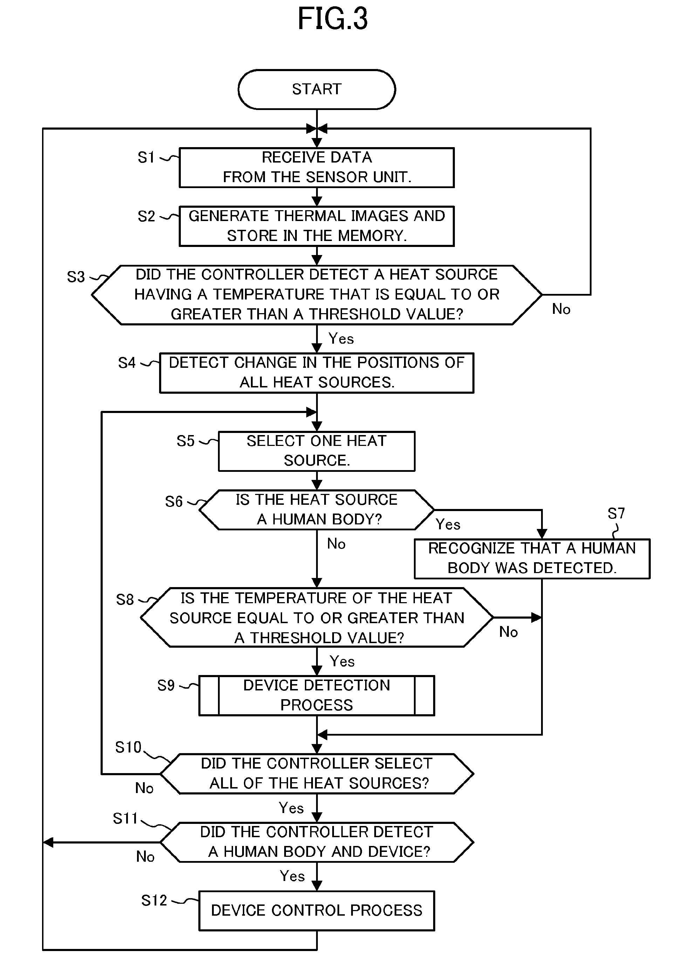

Next, the operation of the system controller 30 will be explained using FIGS. 3 to 5.

As illustrated in FIG. 3, the controller 301 first receives thermal distribution data from the sensor unit 20 (step S1).

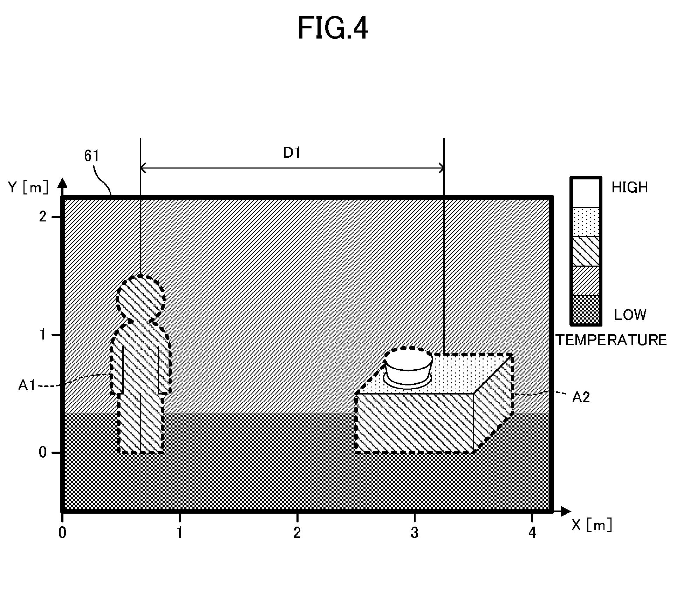

Then, the controller 301 generates a thermal image and stores that image in the memory 302 (step S2). For example, the controller 301 generates a thermal image 61 from the data that is received from the sensor unit 20 such as schematically illustrated in the bold frame in FIG. 4. The user U1 is depicted in the thermal image 61 as area A1 that indicates a heat source. Moreover, the device 40 that is heating a vessel on top of the cooking stove is depicted in the thermal image 61 as an area A2 that indicates a heat source. Furthermore, X-coordinate values and Y-coordinate values in the room 13 are correlated with the thermal image 61 in FIG. 4.

Next, the controller 301 determines whether or not a heat source having a temperature that is equal to or greater than a threshold value is detected from the thermal image (step S3). More specifically, the controller 301 determines whether or not there is an area included in the thermal image that indicates a temperature of 33°C or greater. When it is determined that such a heat source is not detected (step S3: NO), the controller 301 repeats the process from step S1.

On the other hand, when it is determined that such a heat source is detected (step S3: YES), the controller 301 detects change in the position for all of the detected heat sources (step S4). More specifically, the controller 301 reads the log of thermal images stored in the memory 302, calculates the change in the position of the most recent heat sources for each heat source detected in step S3.

The position of a heat source means the position inside the room 13 that corresponds to a pixel value that indicates coordinates in the thermal image. Moreover, a change in position can also be a change in the position of the center of gravity of the area detected in step S3, or can be a change in the position of the point in the area having the highest temperature.

Next, the controller 301 selects one heat source that has not yet been selected from among the heat sources that were detected in step S3 (step S5).

Then, the controller 301 determines whether or not the selected heat source is a human body (step S6). More specifically, the controller 301 determines whether or not the selected heat source is a human body based on the temperature of the selected heat source that was detected in step S3 and the change in the position that was detected in step S4. Technology for detecting a human body from a thermal image in this way is known, so that details of this technology are omitted in this specification.

When it is determined that the heat source is a human body (step S6: YES), the controller 301 recognizes that a human body has been detected (step S7). More specifically, the controller 301 recognizes that the heat source that was selected in step S5 is a human body, and detects the position of the human body in the room 13 from the pixel value that indicates the coordinates of the heat source in the thermal image. After that, the controller 301 moves to the processing in step S10.

On the other hand, when it is determined that the heat source is not a human body (step S6: NO), the controller 301 determines whether or not the temperature of the selected heat source has become equal to or greater than a threshold value (step S8).

More specifically, the controller 301 reads the log of thermal images from the memory 302, and calculates the change in temperature at the point in the area selected as a heat source where the temperature is highest. Then the controller 301 determines that when the temperature of the heat source rises and exceeds 50 °C, for example, the temperature has become equal to or greater than the threshold value. This threshold value is a threshold value for detecting the device 40, and is greater than the threshold value (33 °C) that is used in step S3.

When it is determined that the temperature of the heat source is not equal to or greater than the threshold value (step S8: NO), the controller 301 moves to the processing in step S10.

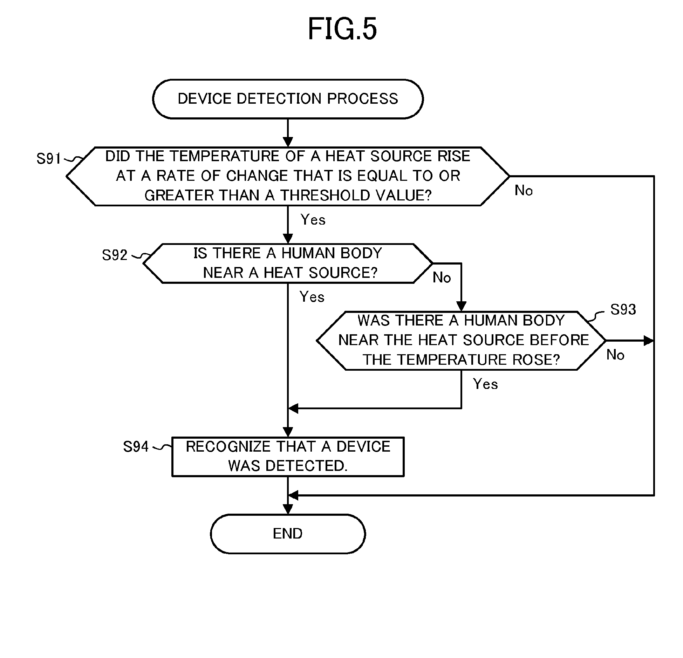

On the other hand, when it is determined that the temperature of the heat source has become equal to or greater than the threshold value (step S8: YES), the controller 301 executes a device detection process (step S9). In this device detection process, when the temperature of the heat source transitions according to a specified pattern that was set beforehand, the heat source is detected as the device 40. FIG. 5 illustrates the processing flow that is executed in the device detection process.

As illustrated in FIG. 5, in the device detection process, the controller 301 first determines whether or not the temperature of the heat source has risen at a rate of change that is equal to or greater than a threshold value (step S91). For example, the controller 301 calculates the rate of change of the temperature of the heat source during the most recent one minute from the log of thermal images, and determines whether or not the rate of change is equal to or greater than 30 °C/min.

When the judgment in step S91 is negative (step S91: NO), the controller 301 ends the device detection process.

On the other hand, when the judgment in step S91 is affirmative (step S91: YES), the controller 301 determines whether or not a human body is near the heat source (step S92). More specifically, the controller 301 determines whether or not there is a human body by trying to detect a human body within a range of approximately 3 m from the heat source. When it is determined that there is a human body near the heat source (step S92: YES), the controller 301 determines that the user U1 is using the device 40 and moves to the processing of step S94.

On the other hand, when it is determined that there is no human body near the heat source (step S92: NO), the controller 301 determines whether or not there was a human body near the heat source before the rise in temperature of the heat source (step S93). More specifically, the controller 301 reads from the memory 302 the log of thermal images that were generated within a fixed amount of time until the temperature of the heat source began to rise. The fixed amount of time is, for example, approximately 2 minutes. The controller 301 then, determines whether or not there was a human body by trying to detect a human body within a range of approximately 2 m from the heat source in the read thermal images.

When the judgment in step S93 was negative (step S93: NO), the controller 301 ends the device detection process. However, when the judgment in step S93 was affirmative (step S93: YES), the controller 301 determines that user U1 moved away from the device 40 after operating the device 40, and moves to the processing in step S94.

In step S94, the controller 301 recognizes that the device 40 was detected. More specifically, the controller 301 recognizes that the heat source that was selected in step S5 is the device 40, and detects the position of the device 40 in the room 13 from the pixel value that indicates the coordinates of the heat source in the thermal images. After that, the controller 301 ends the device detection process.

Returning to FIG. 3, after the device detection process (step S9), the controller 301 determines whether or not all of the heat sources have been selected (step S10). When it is determined that not all of the heat sources have been selected (step S10: NO), the controller 301 repeats the processing from step S5. As a result, all of the heat sources depicted in the thermal image are sequentially selected.

On the other hand, when it is determined that all of the heat sources have been selected (step S10: YES), the controller 301 determines whether or not both a human body and the device 40 were detected (step S11). When the judgment in step S11 is negative (step S11: NO), the controller repeats the processing from step S1.

However, when the judgment in step S11 is affirmative (step S11: YES), the controller 301 executes a device control process (step S12). In this device control process, the device 40 is controlled based on the position of the human body and the device 40.

For example, the controller 301 may suppress for a set amount of time the output of the devices 40 to 43 so that the total amount of power consumed by the devices 40 to 43 does not exceed a preset value (demand control). After that, the controller 301 controls the device 40 only when restoring the output of the device 40.

More specifically, when the distance D1 between the position of the device 40 and the position of the human body illustrated in FIG. 4 is equal to or less than a threshold value, the controller 301 transmits a restore instruction to the device 40 (enables operation). As a result, the device 40, for example, restarts heating of the device on the cooking stove. The threshold value at this time is approximately 2 m for example.

On the other hand, when the distance D1 is greater than the threshold value, the controller 301 does not transmit a restore instruction to the device 40 (prevents operation). As a result, the device 40 does not restart heating. The controller 301 can also transmit a restore instruction to the device 40 when the user U1 goes close to the device 40 and the distance D1 becomes equal to or less than the threshold value.

After the controller 301 has transmitted a restore instruction according to the distance D1, or after it is determined that a restore instruction will not be transmitted, the controller 301 ends the device control process. Moreover, when the controller 301 has not suppressed the output of the devices 40 to 43, or when a fixed amount of time has not elapsed from the start of suppressed output, the controller 301 ends the device control process without executing the process. After the end of the device control process (step S 12), the controller 301 repeats the processing from step S1. As a result, generation of a thermal image, detection of a human body and device 40, and the device control process are repeated per minute, for example.

As was explained above, in the control system 100 of this embodiment, the device 40 is controlled based on the distance between a human body and device 40. More specifically, when a human body is not near the device 40, operation of the device 40 is prohibited. As a result, an excessive rise in temperature of a pot or flying pan that is being used for cooking is prevented when the user U1 is not paying attention. Therefore, the control system 100 is able to safely control the device 40.

Moreover, when the temperature of a heat source that is depicted in a thermal image is equal to or greater than a threshold value (50 °C), the control system 100 detected that heat source as the device 40. As a result, the control system 100 is able to efficiently detect a high-temperature device 40 by excluding heat sources having a relatively low temperature that the user U1 is in contact with on a daily basis.

Furthermore, when the temperature of a heat source that is depicted in the thermal images transitions according to a specified pattern that is set in advance, the control system 100 detected that heat source as the device 40. More specifically, the control system 100 detected the device 40 when the rate of change in the temperature was equal to or greater than a threshold value (30 °C/min). By doing so, the control system 100 is able to efficiently detect a heat-generating device, the temperature of which rises suddenly. Moreover, the control system 100 is able to efficiently detect the device 40 by searching for a heat source, the temperature of which transitions according to a pattern that corresponds to the characteristics of the device 40.

Moreover, when the position of a human body with respect to the position of a heat source that is depicted in the thermal images transitions according to a specified pattern that was set in advance, the control system 100 detected the heat source as the device 40 (steps S92, S93). As a result, the control system 100 is able to definitely detect the device 40 that a user U1 is actually using.

### Second Embodiment

Next, a second embodiment will be explained while centering on the differences with the first embodiment described above. The same reference numbers will be used for construction that is the same or equivalent to that of the embodiment described above, and an explanation thereof will be omitted.

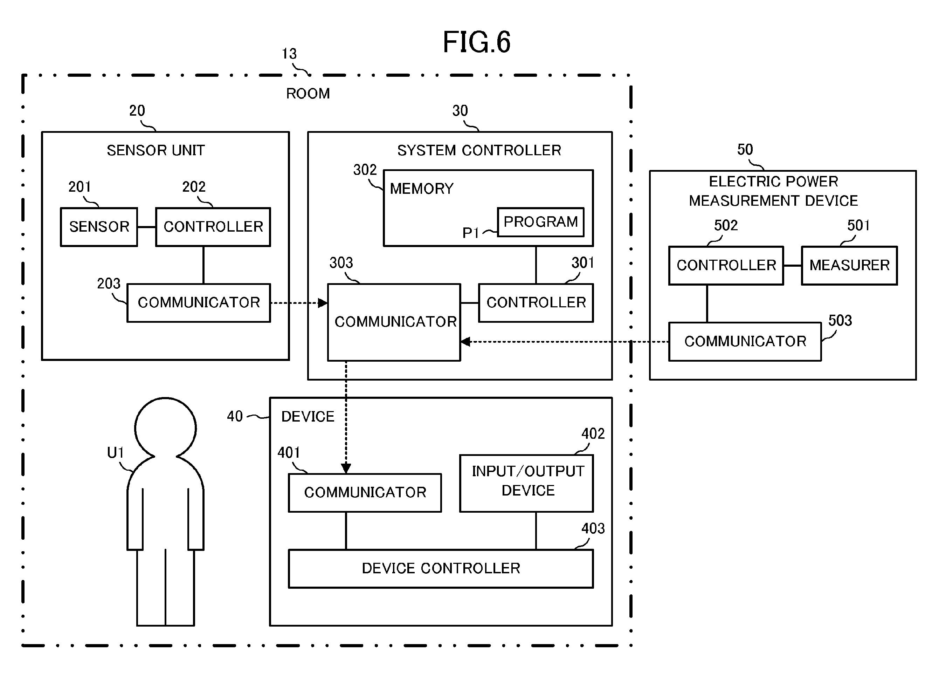

A system controller 30 of this embodiment, as illustrated in FIG. 6, communicates with an electric power measurement device 50.

The electric power measurement device 50 is installed on a distribution board of a building 10, for example. The electric power measurement device 50 measures the electric power that is consumed by a group of devices that include devices 40 to 43, and transmits the measurement results to the system controller 30 at specified intervals of time. The electric power measurement device 50 comprises a measurer 501, a controller 502 and a communicator 503.

The measurer 501, for example, comprises an electric-current sensor and an electric-voltage sensor that are located on the power line that supplies electric power to the group of devices. The measurer 501 measures a physical value such as electric current and electric voltage, and notifies the controller 502 of the measured physical values.

The controller 502 comprises a CPU and RAM. The controller 502 calculates the consumed electric power of the group of devices based on the physical values that were notified from the measurer 501. The controller 502 then transmits data that indicates the calculated consumed electric power to the system controller 30 by way of the communicator 503.

The communicator 503 is a communication interface for the electric power measurement device 50 to perform wireless communication with the system controller 30. The system controller 30 sequentially stores data that is transmitted by way of the communicator 503 in a memory 302.

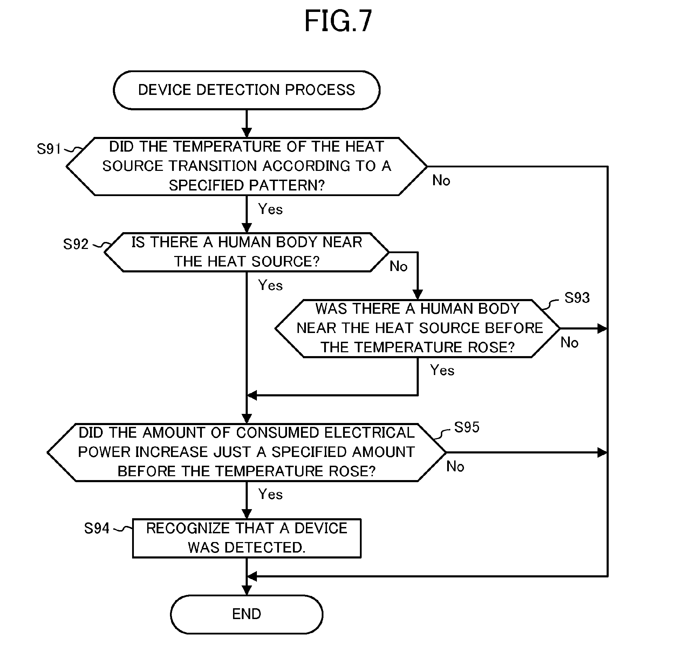

Next, the device detection process that is executed by the system controller 30 of this embodiment will be explained using FIG. 7.

The controller 301 of this embodiment executes the same processing as in steps S91 to S93 of the first embodiment.

When it is determined that there is a human body near a heat source (step S92: YES) and when the judgment in step S93 is affirmative (step S93: YES), the controller 301 determines whether or not the amount of consumed electric power has increased by a preset amount before the temperature of the heat source rises(step S95). More specifically, the controller 301 determines whether or not the amount of increase in the electric power consumption that was notified from the electric power measurement device 50 has become roughly equal to a value stored in advance in the memory 302 as the electric power consumption of the device 40.

When the judgment in step S95 is affirmative (step S95: YES), the controller 301 determines that the heat source is device 40, and moves to the processing of step S94. As a result, the controller 301 detects the heat source, the temperature of which rose when the electric power consumption increased by a specified amount, as the device 40. On the other hand, when the judgment in step S95 is negative (step S95: NO), the controller 301 determines that the heat source is not the device 40 and ends the device detection process.

As was explained above, the controller 301 of this embodiment detects the device 40 based on the electric power consumption. As a result, the controller 301 is able to detect the device 40 with higher accuracy than in the first embodiment.

Embodiments of the present disclosure were explained above; however, the present disclosure is not limited by the embodiments above.

For example, the devices 40 to 43 are not limited to being an IH cooking device and could be a device that generates heat such as a hot plate, a rice cooker, a fan heater, an electric stove and the like.

For example, the sensor unit 20, in addition to a thermopile array that detects infrared rays, can also comprise an illuminance sensor 204 that detects illumination intensity, a temperature sensor 205 that detects the room temperature, and a humidity sensor 206 that detects humidity.

When the sensor unit 20 comprises an illuminance sensor 204, the controller 301 can execute a more flexible device detection process than in the embodiments described above. For example, after the judgment in step S92 was negative, the controller 301 could use the illuminance sensor 204 to determine whether or not the inside of the room 13 is dark. When the inside of the room is dark, the controller 301 can determine that the user U1 has forgotten that the device 40 is in use. In that case, the controller 301 can safely control the device 40 by turning OFF the power to the device 40.

Moreover, when the sensor unit 20 comprises a humidity sensor 206, the controller 301 can execute an even more flexible device detection process than in the embodiments described above. For example, after the judgment in step S93 is affirmative, the controller 301 can use the humidity sensor 206 and determine whether or not the humidity has decreased. When the humidity has decreased, the controller 301 can determine that a pot that is being used for cooking has no water in it. In that case, the controller 301 can safely control the device 40 by turning OFF the power to the device 40.

Furthermore, it is also possible for the sensor unit 20 to comprise an alarm 207 that issues a warning sound. When the controller 202 determines from the measured thermal distribution that the distance between a heat source that has a higher temperature than a preset temperature and a human body is equal to or less than a threshold value, the controller 202 can cause the alarm 207 to issue a warning sound. As a result, the sensor unit 20 can prompt the user U1 to take caution. Moreover, the system controller 30 can also comprise an alarm that issues a warning sound, and the controller 301 can control the alarm and can prompt the user U1 to take caution.

The sensor unit 20 and the system controller 30, instead of an alarm, can also comprise a light emitter 208 that prompts the user U1 to take caution by causing an LED (Light Emitting Diode), for example, to light up. In addition, the sensor unit 20 and system controller 30 can issue a warning to the user U1 by using a speaker that issues a warning sound or voice, vibrating motor and the like.

Moreover, in the device detection process (step S9), the algorithm for detecting the device 40 can be arbitrarily changed. The device detection process should detect the device 40 based on at least one of the temperature of a heat source depicted in a thermal image, the transition of the temperature of the heat source, the position of the heat source, the transition of the position of the heat source, the position of a human body, the transition of the position of human body, and the like.

For example, a user U1 that uses a halogen heater can get warm from the radiated heat from the halogen heater. Therefore, when the direction of a human body as seen from the heat source is within a fixed range, the controller 301 can detect that heat source as being a halogen heater.

Moreover, the control method in the device control process (step S 12) is arbitrary.

For example, when the distance D1 is equal to or less than a threshold value, the controller 301 can prohibit specified operation of the device 40. When the distance D1 is greater than a threshold value, the controller 301 can allow specified operation of the device 40. The controller 301, instead of allowing or prohibiting one kind of operation, can, depending on the case, request the device 40 to perform a different operation. The controller 301, depending on the case, can control the output of the device 40, or can control the device 40 using a timer.

Moreover, the number of sensor units and the number of devices of a control system 100 and subsystem are arbitrary. For example, when many sensor units are installed, the number of blind spots of the infrared rays radiated from the heat source decreases.

In the embodiments described above, a subsystem comprised sensor units and devices that were installed in each room; however, a subsystem is not limited to this. For example, a subsystem can comprise sensor units 20 to 24, a system controller 30 and device 40. This subsystem can detect the user U1 when the user U1 is in any room 11 to 14.

Moreover, the system controller 30 of each of the embodiments described above comprised a controller 301 that executes other processing in addition to detecting a human body and device 40; however, the system controller 30 is not limited to this. For example, the system controller 30 can also comprise as separate devices, a detector that detects a human body and device 40, and a controller 301 that executes other processing.

Furthermore, the system controller 30 can also comprise a communication interface for communicating with the sensor unit 20, and a communication interface for communicating with the device 40 that are separate devices from each other.

The sensor units 20 to 24, system controller 30 and devices 40 to 43 of the embodiments described above performed wireless communication; however, they could also perform wired communication.

Moreover, in each of the embodiments described above, a human body was detected; however, the embodiments are not limited to this. For example, the controller 301 could also detect the position of an animal such as a pet, and control the device 40 based on the detected position. The controller 301 could also detect the position of a robot vacuum cleaner that operates on its own.

In the embodiments described above, the controller 301 detected both a human body and device 40 from a thermal image; however, the embodiments are not limited to this. For example, the controller 301 can detect a heat-generating device from a thermal image, and detect a moving object, including a human body, by using a camera that records visible light. When using a camera, the controller 301 can easily detect a moving body other than a human body.

Moreover, in the embodiments described above, a human body and device 40 were detected by using thermal images that were generated by the controller 301 of the system controller 30. However, the thermal distribution data that is generated by the controller 202 of the sensor unit 20 is substantially data indicating a thermal image. Therefore, the controller 301 can handle thermal distribution data in the same way as the thermal images of the embodiments described above.

The function of the system controller 30 of the embodiments described above can be achieved by special hardware, or by a normal computer system.

For example, the program P1 that is stored in the memory 302 may be stored and distributed on a non-transitory recording medium such as a flexible disk, a CD-ROM (Compact Disk Read-Only Memory), a DVD (Digital Versatile Disc), an MO (Magneto-Optical disk) and the like that can be read by a computer, and that program P1 may be installed on the computer to configure a device that executes the processing described above.

Moreover, it is also possible to store the program P1 on a disk drive of a server on a communication network such as the Internet, and, for example, superimpose the program P1 on a carrier wave and download the program P1 to a computer.

The processing described above can also be achieved by starting and executing the program P1 while transferring the program P1 by way of a communication network.

Furthermore, the processing described above can also be achieved by causing all or part of the program P1 to be executed on a server device, and by a computer executing the program P1 while sending and receiving information related to that process.

Furthermore, when the functions described above are achieved by the OS (Operating System) sharing, or achieved by the OS and an application working together, the only part other than the OS can be stored and distributed on a medium, or can be downloaded onto a computer.

The method for achieving the functions of the controller 301 is not limited to software, and all or part of the functions could also be achieved by special hardware (circuits and the like).

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This specification claims priority over Japanese Patent Application No. 2012-281287, as filed on December 25, 2012. Japanese Patent Application No. 2012-281287 is included in its entirety in this specification by reference.

### Industrial Applicability

The control system, control method and program of the present disclosure can be applied to control of a heat-generating device.

### Reference Signs List

- 10: Building
- 11, 12, 13, 14: Room
- 20, 21, 22, 23, 24: Sensor unit
- 30: System controller
- 40,41,42,43: Device
- 50: Electric power measurement device
- 61: Thermal image
- 100: Control system
- 201: Sensor
- 202, 301, 502: Controller
- 203, 303, 401, 503: Communicator
- 302: Memory
- 402: Input/output device
- 403: Device controller
- 501: Measurer
- A1, A2: Area
- P1: Program
- U1: User

## Claims

1. A control system comprising:
a heat-generating device to generate heat;
thermal image generation means for generating thermal images of a space where the heat-generating device is located;
position detection means for detecting the position of the heat-generating device and the position of a moving body that moves around the heat-generating device based on the thermal images; and
control means for controlling the heat-generating device based on the position of the heat-generating device and the position of the moving body that were detected by the position detection means.

2. The control system according to Claim 1, wherein
the moving body is a human body; and
the control means controls the heat-generating device based on the distance between the position of the heat-generating device and the position of the human body that were detected by the position detection means.

3. The control system according to Claim 1 or Claim 2, wherein
the thermal image generating means generates the thermal images using a thermopile array that comprises thermopile elements that are arranged in a matrix shape.

4. The control system according to any one of the Claims 1 to 3, wherein
when the temperature of a heat source that is depicted in a thermal image is equal to or greater than a threshold value, the position detection means detects the position of the heat-generating device from the position of the heat source in the thermal image.

5. The control system according to any one of the Claims 1 to 4, wherein
the position detection means detects the position of the heat-generating device from the position of a heat source in the thermal images when the temperature of the heat source that is depicted in the thermal images transitions according to a preset pattern.

6. The control system according to any one of the Claims 1 to 5, wherein
the position detection means detects the position of the heat-generating device from the position of a heat source in the thermal image when the position of the moving body transitions with respect to the position of the heat source that is depicted in the thermal images according to a preset pattern.

7. The control system according to any one of the Claims 1 to 6, comprising
measurement means for measuring the electric power that is consumed by a group of devices that include the heat-generating device, wherein
the position detection means detects the position of the heat-generating device from the position in the thermal images of a heat source, the temperature thereof rising when the electric power measured by the measurement means increased.

8. The control system according to any one of the Claims 1 to 7, comprising
illuminance detection means for detecting illumination intensity; and
humidity detection means for detecting humidity; wherein
the control means controls the heat-generating device based on the illumination intensity detected by the illuminance detection means, and the humidity detected by the humidity detection means.

9. The control system according to any one of the Claims 1 to 8, comprising
warning means for issuing a warning sound when, based on the thermal images, the distance between the position of a heat source, the temperature thereof being higher than a preset temperature, and the position of the moving body is determined to be equal to or less than a threshold value.

10. The control system according to any one of the Claims 1 to 9, comprising
light emitting means for emitting light when, based on the thermal images, the distance between the position of a heat source, the temperature thereof being higher than a preset temperature, and the position of the moving body is determined to be equal to or less than a threshold value.

11. A control method, including:
a thermal images generation step of generating thermal images of a space where a heat-generating device that generates heat is located;
a position detection step of detecting the position of the heat-generating device and the position of a moving body that moves around the heat-generating device based on the thermal images; and
a control step of controlling the heat-generating device based on the position of the heat-generating device and the position of the moving body that were detected in the position detection step.

12. A program for causing a computer to function as:
receiving means for receiving signals indicating thermal images of a space where a heat-generating device that generates heat is located;
position detection means for detecting the position of the heat-generating device and the position of a moving body that moves around the heat-generating device based on the thermal images; and
control means for controlling the heat-generating device based on the position of the heat-generating device and the position of the moving body that were detected by the position detection means.
